# EUROPÄISCHE PATENTSCHRIFT

(11) **EP 2 344 758 B1**
(45) Veröffentlichungstag und Bekanntmachung des Hinweises auf die Patenterteilung: **10.04.2013**
(21) Anmeldenummer: 09771687.2
(22) Anmeldetag: 06.11.2009
(51) Int. Cl.: F03D 9/00, F03D 11/00

(54) **HYDRAULISCHE VERSORGUNGSEINHEIT**
HYDRAULIC SUPPLY UNIT
UNITÉ D'ALIMENTATION HYDRAULIQUE

(30) Priorität: 14.11.2008 DE 102008057455
(43) Veröffentlichungstag der Anmeldung: 20.07.2011
(73) Patentinhaber: Aerodyn Engineering GmbH, 24768 Rendsburg (DE)
(72) Erfinder: SIEGFRIEDSEN, Sönke, 24768 Rendsburg (DE)
(74) Vertreter: Lobemeier, Martin Landolf
(86) Internationale Anmeldenummer: PCT/DE2009/001574
(87) Internationale Veröffentlichungsnummer: WO 2010/054629

(56) Entgegenhaltungen:
- WO-A1-03/091577
- WO-A1-2007/071239
- US-A- 4 503 673

## Beschreibung

Die Erfindung betrifft eine hydraulische Versorgungseinheit zur Schmierung und/oder Kühlung von in der Gondel einer Windenergieanlage angeordneten mechanischen und elektrischen Komponenten, sowie zur Versorgung hydraulischer Stelleinrichtungen mit Hydraulikflüssigkeit.

In Windenergieanlagen werden mechanische, elektrische und hydraulische Komponenten benötigt, die geschmiert und/oder gekühlt bzw. mit hydraulischen Fluiden versorgt werden müssen. Beispielsweise werden hydraulische Einheiten für die Steuerung der Rotorbremse, der Yaw-Bremse, der Blattverstellzylinder, der Rotorarretierbolzen verwendet, wobei auch Schmierung von Komponenten, wie z.B. dem Getriebe, und Abfuhr von Verlustwärme über die in den hydraulischen Systemen transportierten Fluide erfolgt. So müssen der Generator, die Leistungselektronik und der Trafo gekühlt, das Getriebe geschmiert und gekühlt und die Hydraulik mit einer Druckflüssigkeit versorgt und gekühlt werden.

Ein Beispiel ist in der US 4503673 dargestellt.

Ein Nachteil des Aufbaus derzeitiger Windenergieanlagen besteht nun darin, dass die Installation derartiger hydraulischer Versorgungseinheiten sehr arbeits- und zeitaufwändig ist. Die Einheiten müssen in die Gondel der Windenergieanlage einzeln eingebracht, dort einzeln befestigt und jeweils einzeln angeschlossen werden. Darüber hinaus ist es von Nachteil, dass jede Einheit auch einzeln auf ihre von ihr selbst ausgeführte Funktion und zusammen mit den übrigen Komponenten, wie der Sensorik und der Elektrik der Anlage, auf ihre Wechselwirkung mit den anderen Komponenten der Windenergieanlage überprüft werden muss. Insgesamt muss festgestellt werden, dass die bisher übliche, in der Gondel an verschiedenen Orten vorgenommene Installation dieser einzelnen Versorgungseinheiten zu einem störanfälligen Windenergieanlagenaufbau führt.

Aufgabe der Erfindung ist es daher, eine hydraulische Versorgungseinheit zu schaffen, die einfach, schnell und sicher zu installieren ist, wobei insbesondere die Prüfphase neu installierter Versorgungseinheiten auf ein Minimum reduziert werden soll.

Die Aufgabe wird gelöst durch eine hydraulische Versorgungseinheit mit den Merkmalen von Anspruch 1. Die Unteransprüche geben vorteilhafte Ausgestaltungen der Erfindung wieder.

Grundgedanke der Erfindung ist es, die in einer Windenergieanlage benötigten hydraulischen Komponenten in einer funktionellen Einheit zusammenzufassen, die vormontiert und vor allem nach Fertigung umfassend geprüft werden kann, bevor die hydraulische Versorgungseinheit zur Windenergieanlage verbracht und dort eingebaut wird. Mit der erfindungsgemäßen hydraulischen Versorgungseinheit wird sichergestellt, dass die bislang nach dem Stand der Technik vor Ort durchgeführte Überprüfung der hydraulischen Versorgungseinheiten weitestgehend in den Fertigungsprozess des Komponentenherstellers eingebunden und die Montagezeiten sowie der Prüfaufwand bei der Endmontage von Windenergieanlagen beim Windenergieanlagenhersteller dadurch verringert werden kann. Der Anschluss der hydraulischen Versorgungseinheit nach der Erfindung erfolgt nach deren Einbau in die Windenergieanlage bevorzugt durch an der Versorgungseinheit vorgesehene Anschlüsse, die als Steck- oder Schraubverbindungen ausgebildet sind, wobei die fluidführenden Leitungen bevorzugt durch Schraubverbindungen angeschlossen werden. Der Anschluss der Versorgungseinheit an elektrische Leitungen erfolgt hingegen bevorzugt mittels Steckverbindungen.

So können die in der Gondel der Windenergieanlage bereits installierten, zu den von der Versorgungseinheit zu versorgenden Einrichtungen führenden Rohrleitungen beispielsweise durch kurze Schlauchverbindungen mit den (als Schraubverbindungen ausgeführten) Anschlüssen der Versorgungseinheit verbunden werden, sodass durch Verwendung von flexiblen Schläuchen für ausreichend Toleranzen beim Anschluss der Versorgungseinheit gesorgt ist. Nach direktem Anschluss der elektrischen Kabel an die (als Steckverbindungen ausgeführten) Anschlüsse der Versorgungseinheit kann sich darauf die Überprüfung der Komponenten der Versorgungseinheit auf einen einfachen Funktionstest beschränken.

Ganz besonders vorteilhaft ist es, wenn die Versorgungseinheit auf einer Trägerplatte gelagert ist, die einen konstruktiven Bestandteil der Windenergieanlage darstellt, z.B. eine Trägerplatte im Bereich des Yaw-Lagers, da dadurch eine kompakte und stabile Bauweise erreicht werden kann. Besonders bevorzugt ist der Tank der Versorgungseinheit mit der Trägerplatte über Schwingungsdämpfer verbunden, die eine Schwingungen der Anlage dämpfende Lagerung der Versorgungseinheit gewährleisten.

Die Erfindung wird anhand eines in den Zeichnungen dargestellten besonders bevorzugt ausgestalteten Ausführungsbeispiels näher erläutert. Es zeigen:
- Fig. 1: eine perspektivische Ansicht der erfindungsgemäßen hydraulischen Versorgungseinheit;
- Fig. 2: eine Seitenansicht der Versorgungseinheit aus Fig. 1;
- Fig. 3: eine Draufsicht auf die Versorgungseinheit aus Fig. 1 bzw. Fig. 2; und
- Fig. 4: eine schematische Ansicht eines besonders bevorzugt ausgestalteten Kühlkreislaufs.

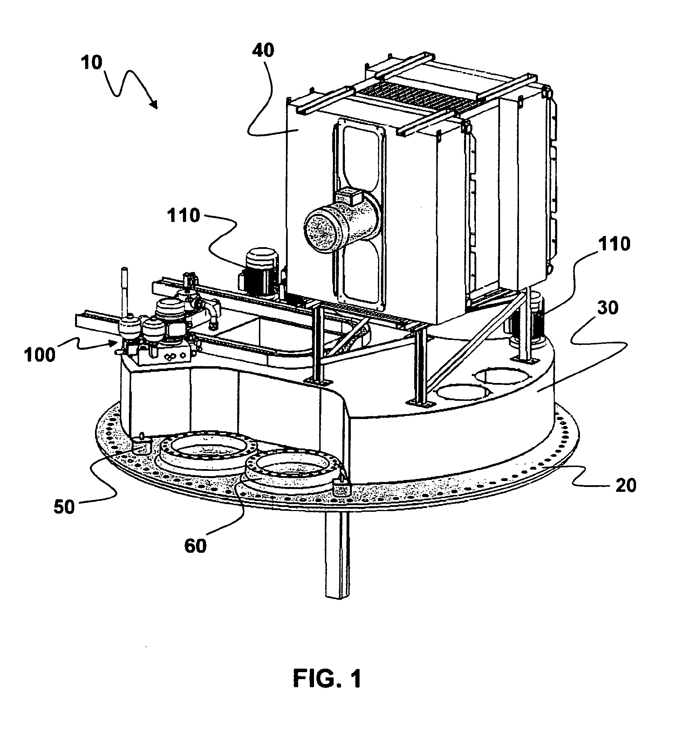

Fig. 1 zeigt eine perspektivische Ansicht der hydraulischen Versorgungseinheit nach der Erfindung. Die hydraulische Versorgungseinheit 10 besteht aus einer Trägerplatte 20, auf der der Tank 30 angeordnet ist. Der Tank 30 weist eine erste Kammer zum Zuführen und Kühlen von das Getriebe der Windenergieanlage schmierendem Öl und eine zweite Kammer zum Bereitstellen von zum Betätigen von hydraulischen Stelleinrichtungen der Windenergieanlage dienendem Hydrauliköl. Gegebenenfalls ist auch eine dritte Kammer zum Zuführen und Kühlen von den Generator kühlender Flüssigkeit, z.B. Wasser, bevorzugt ein Wasser/Glykol-Gemisch, vorgesehen.

Zusätzlich weist die erfindungsgemäße hydraulische Versorgungseinheit 10 einen Wärmetauscher 40 oder eine Einheit mit zwei oder mehr Wärmetauschern zum Abführen der Verlustwärme an die Umgebung bzw. Außenluft auf, der bevorzugt fest mit dem Tank 30 verbunden ist.

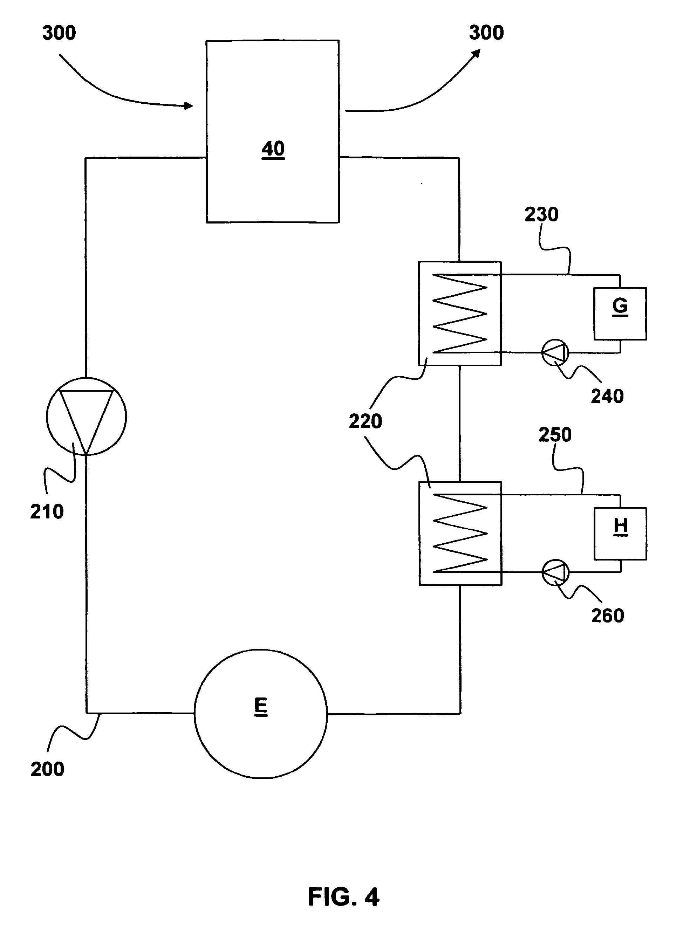

Der Wärmetauscher 40 weist bevorzugt einen in Fig. 4 schematisch dargestellten Kühlkreislauf 200 auf, der eine Kühlflüssigkeit, bevorzugt ein Wasser/Glykol-Gemisch führt. Die mittels der Pumpe 210 im Kühlkreislauf 200 zirkulierende Kühlflüssigkeit nimmt an den elektrischen Komponenten E der Windenergieanlage deren Verlustwärme auf und führt diese dem Wärmetauscher 40 zu. Im Wärmetauscher 40 wird die von der Kühlflüssigkeit transportierte Wärme dann über einen durch den Wärmetauscher 40 geführten Luftstrom - wie durch die Pfeile angedeutet - an die Umgebungs- bzw. Außenluft 300 abgegeben.

Besonders bevorzugt ist im Kühlkreislauf 200 wenigstens ein weiterer Wärmetauscher 220 vorgesehen, der die vom Hydrauliköl und/oder vom Getriebeöl geführte Wärme an die Kühlflüssigkeit abgibt. Hierzu können auch das Hydrauliköl und das Getriebeöl in jeweils einem mittels Pumpen 240, 260 angetriebenen Kreislauf 230, 250 geführt werden, wobei der wenigstens eine Wärmetauscher 220 besonders bevorzugt stromabwärts der elektrischen Komponenten E angeordnet ist. Dadurch kann ein besonders einfacher, aber effizienter Aufbau zum Abführen von dem Hydraulik- oder Getriebeöl transportierter Verlustwärme aus dem Getriebe G und den hydraulischen Komponenten H erreicht werden.

Schließlich kann der Kühlkreislauf dabei aus der dritten Kammer mit Kühlflüssigkeit gespeist werden.

Neben dieser bevorzugten Ausführung können auch mehrere Kühlmittel führende Kühlkreisläufe, z.B. jeweils einen für die elektrischen Komponenten, für die mechanischen Komponenten und für die hydraulischen Komponenten vorgesehen sein. Ebenso kann das Hydrauliköl und/oder das Getriebeöl auch direkt dem Wärmetauscher 40 zugeführt werden, ohne dass es eines weiteren Kühlmittels bedarf.

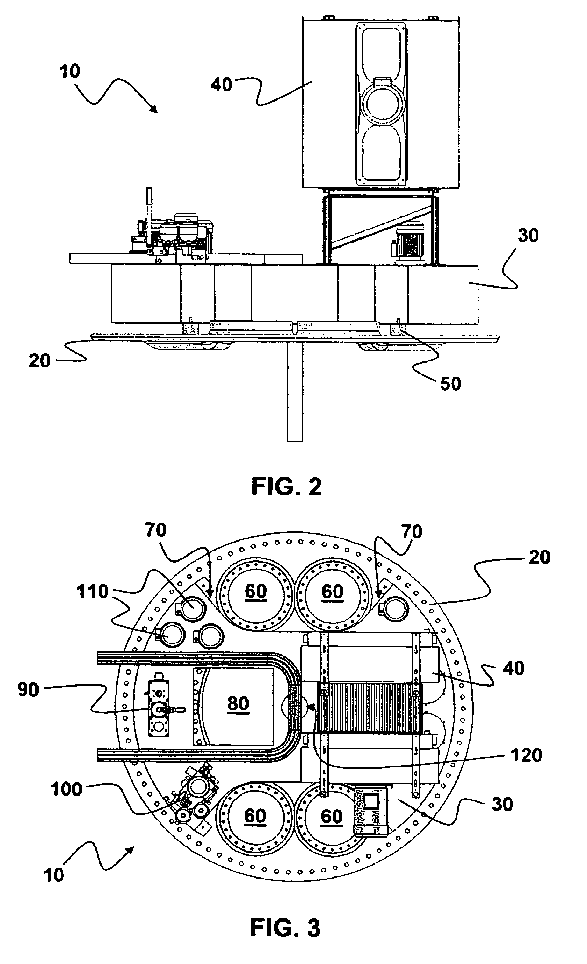

Obwohl nicht näher erläutert, versteht es sich für den Fachmann, dass die Versorgungseinheit 10 über zum Teil in den Zeichnungen dargestellte Steuereinheiten 90 (siehe Fig. 3), Ventile 100, Pumpen 110, Filter, Wartungsöffnungen, Sensoren zur Messung der Temperatur, des Füllstands des Drucks oder der Durchflussmenge, sowie Heizelemente verfügt, die je nach Bedarf einen reibungslosen Betrieb gewährleisten sollen.

Des weiteren nicht dargestellt, sind die die Fluide aufnehmenden Leitungen, die den Tank 30 mit dem Wärmetauscher 40 verbinden. Nicht gezeigt, gleichwohl vorhanden, sind die Anschlüsse zum Anschließen der Versorgungseinheit, also der ersten Kammer und der zweiten Kammer an Leitungen, beispielsweise mittels flexibler (Schlauch-)Leitungen, für die Versorgung des Getriebes mit Schmieröl und für die Versorgung der hydraulisch betriebenen Stelleinrichtungen mit Hydrauliköl, also allgemein den Flüssigkeiten zur Ausübung der Schmier-, Hydraulik- und Kühlfunktion an den jeweiligen mechanischen und hydraulischen, sowie den elektrischen Komponenten.

Fig. 2 und Fig. 3 zeigen die hydraulische Versorgungseinheit 10 nach der Erfindung in einer Seitenansicht und in Draufsicht. Dabei ist zum einen zu erkennen, dass die hydraulische Versorgungseinheit 10 einen sehr kompakten Aufbau ermöglicht und zugleich die Zugänglichkeit aller Elemente erhalten bleibt.

Insbesondere ist vorgesehen, dass die Versorgungseinheit 10 zur Vermeidung von Schäden aufgrund von Vibrationen bevorzugt ihrer Unterseite Schwingungsdämpfer 50 aufweist und über diese auf der Trägerplatte 20 im Bereich des Yaw-Lagers einer Windenergieanlage gelagert ist. Die Trägerplatte 20 und der Tank 30 weisen dann ein Mannloch 80, durch das der Auf- und Einstieg über den Turm einer Windenergieanlage in die Gondel ermöglicht ist. Gleich neben dem Mannloch ist bevorzugt eine Kabeldurchführung 120 angeordnet zum Durchführen und Verlegen der elektrischen Verbindungen aus der Gondel in den Fußbereich des Turms, die bevorzugt durch Steckverbindungen erreicht werden.

Weiterhin weist die Trägerplatte 20 Aufnahmen 60 zur Aufnahme von Motoren für den Yaw-Antrieb, also dem Antrieb zur Ausrichtung der Rotorachse zur Windrichtung auf. Um die hydraulische Versorgungseinheit 10 dennoch kompakt zu halten, ist daher bevorzugt vorgesehen, dass der Tank 30 Aussparungen 70 in dem von den Motoren einzunehmenden Raum aufweist.

Schließlich ist nach einem besonders bevorzugten Ausführungsbeispiel auch noch vorgesehen, dass auf der Unterseite des Tanks 30 der Versorgungseinheit 10 weitere Anschlüsse zum Zuführen und/oder Ablassen des Hydrauliköls, Schmieröls oder der Kühlflüssigkeit angeordnet sind. Für die bessere Zugänglichkeit dieser für die erste Inbetriebnahme oder für Wartungszwecke, z.B. Auffüllen der Tanks und vollständiges Entleeren der Tanks, vorgesehenen Anschlüsse ist speziell vorgesehen, dass die Trägerplatte 20 in dem Bereich dieser (Wartungs-) Anschlüsse (nicht dargestellte) Öffnungen aufweist, durch die diese Anschlüsse erreichbar sind. Ein Austausch der Hydraulik-, Schmier- oder Kühlflüssigkeiten kann dann durch Anschließen von Schläuchen an die mit Ventilen ausgestatteten (nicht dargestellten) Tankanschlüsse erfolgen, die das jeweilige Fluid ab- oder zuführen.

## Patentansprüche

1. Hydraulische Versorgungseinheit (10) zur Schmierung und/oder Kühlung von in der Gondel einer Windenergieanlage angeordneten mechanischen und elektrischen Komponenten, sowie zur Versorgung hydraulischer Stelleinrichtungen mit Hydraulikflüssigkeit,
**gekennzeichnet durch**
einen in Kammern unterteilten Tank (30) mit
- einer ersten Kammer zum Bereitstellen von das Getriebe der Windenergieanlage schmierendem Öl,
- einer zweiten Kammer zum Bereitstellen von zum Betätigen von hydraulischen Stelleinrichtungen der Windenergieanlage dienendem Hydrauliköl,
- einem ersten Anschluss zum Anschließen der ersten Kammer an eine Leitung für die Versorgung des Getriebes mit Schmieröl und
- einem zweiten Anschluss zum Anschließen der zweiten Kammer an eine Leitung für die Versorgung der hydraulisch betriebenen Stelleinrichtungen mit Hydrauliköl, und
einen Wärmetauscher (40) zum Abführen von Wärme aus dem Hydrauliköl, dem Getriebeöl und einer an den elektrischen Komponenten (E) der Windenergieanlage Verlustwärme aufnehmenden, dem Wärmetauscher (40) zugeführten Kühlflüssigkeit.

2. Hydraulische Versorgungseinheit (10) nach Anspruch 1, **dadurch gekennzeichnet, dass** die Kühlflüssigkeit in einem Kühlkreislauf (200) gerührt ist.

3. Hydraulische Versorgungseinheit (10) nach einem der vorhergehenden Ansprüche, **dadurch gekennzeichnet, dass** der Kühlkreislauf (200) wenigstens einen weiteren Wärmetauscher (220) zur Abgabe von Wärme aus dem Getriebeöl und/oder dem Hydrauliköl an die Kühlflüssigkeit aufweist.

4. Hydraulische Versorgungseinheit (10) nach Anspruch 3, **dadurch gekennzeichnet, dass** der wenigstens eine weitere Wärmetauscher (220) stromabwärts der elektrischen Komponenten angeordnet ist.

5. Hydraulische Versorgungseinheit (10) nach einem der vorhergehenden Ansprüche, **dadurch gekennzeichnet, dass** der Tank (30) eine dritte Kammer zum Bereitstellen von Kühlflüssigkeit aufweist.

6. Hydraulische Versorgungseinheit (10) nach einem der vorhergehenden Ansprüche, **dadurch gekennzeichnet, dass** die Versorgungseinheit auf einer Trägerplatte (20) angeordnet ist.

7. Hydraulische Versorgungseinheit (10) nach einem der vorhergehenden Ansprüche, **dadurch gekennzeichnet, dass** der Tank (30) Schwingungsdämpfer (50) aufweist.

8. Hydraulische Versorgungseinheit (10) nach Anspruch 6, **dadurch gekennzeichnet, dass** die Trägerplatte (20) wenigstens eine Aufnahme (60) für einen Motor für den Yaw-Antrieb und der Tank (30) eine Aussparung (70) in dem vom Motor einzunehmenden Raum aufweisen.

9. Hydraulische Versorgungseinheit (10) nach einem der vorhergehenden Ansprüche, **dadurch gekennzeichnet, dass** der Tank (30) mit einem Mannloch (80) versehen ist.

10. Hydraulische Versorgungseinheit (10) nach einem der vorhergehenden Ansprüche, **dadurch gekennzeichnet, dass** die Anschlüsse für die fluidführenden Leitungen als Schraubverbindungen und die Anschlüsse für elektrische Leitungen als Steckverbindungen ausgebildet sind.

11. Hydraulische Versorgungseinheit (10) nach einem der vorhergehenden Ansprüche, **dadurch gekennzeichnet, dass** auf der Unterseite des Tanks (30) Anschlüsse zum Zuführen und/oder Ablassen des Hydrauliköls, Schmieröls oder Kühlwassers angeordnet sind.

## Claims

1. A hydraulic supply unit (10) for lubricating and/or cooling mechanical and electrical components disposed in the nacelle of a wind power plant, and for supplying hydraulic actuating devices with hydraulic fluid,
**characterized by**
a tank (30) that is divided into chambers and has
- a first chamber for providing oil lubricating the gearbox of the wind power plant,
- a second chamber for providing hydraulic oil used to operate hydraulic actuating devices of the wind power plant,
- a first connection for connecting the first chamber to a line for supplying the gearbox with lubricating oil, and
- a second connection for connecting the second chamber to a line for supplying the hydraulically operated actuating devices with hydraulic oil, and
a heat exchanger (40) for dissipating heat from the hydraulic oil, the gearbox oil and a coolant that is fed to the heat exchanger (40) and absorbs lost heat at the electrical components (E) of the wind power plant.

2. The hydraulic supply unit (10) according to Claim 1, **characterized in that** the coolant is guided in a cooling circuit (200).

3. The hydraulic supply unit (10) according to one of the preceding claims, **characterized in that** the cooling circuit (200) exhibits at least one further heat exchanger (220) for dissipating heat from the gearbox oil and/or the hydraulic oil to the coolant.

4. The hydraulic supply unit (10) according to Claim 3, **characterized in that** the at least one further heat exchanger (220) is disposed downstream of the electric components.

5. The hydraulic supply unit (10) according to one of the preceding claims, **characterized in that** the tank (30) has a third chamber for providing coolant.

6. The hydraulic supply unit (10) according to one of the preceding claims, **characterized in that** the supply unit is disposed on a base plate (20).

7. The hydraulic supply unit (10) according to one of the preceding claims, **characterized in that** the tank (30) has vibration absorbers (50).

8. The hydraulic supply unit (10) according to Claim 6, **characterized in that** the base plate (20) has at least one receptacle (60) for a motor for the yaw drive and the tank (30) has a receptacle (70) in the space to be occupied by the motor.

9. The hydraulic supply unit (10) according to one of the preceding claims, **characterized in that** the tank (30) is provided with a manhole (80).

10. The hydraulic supply unit (10) according to one of the preceding claims, **characterized in that** the connections for the fluid-carrying lines are designed as screw-type connections and the connections for electrical lines as plug-type connections.

11. The hydraulic supply unit (10) according to one of the preceding claims, **characterized in that** connections for supplying and/or draining the hydraulic oil, lubricating oil or cooling water are disposed on the bottom side of the tank (30).

## Revendications

1. Unité d'alimentation hydraulique (10) pour la lubrification et/ou le refroidissement des composants mécaniques et électriques, disposés dans la nacelle d'une centrale à énergie éolienne, ainsi que pour l'alimentation de servomécanismes hydrauliques en fluide hydraulique,
**caractérisée par le fait**
**qu'**un réservoir (30) compartimenté en chambres avec
- une première chambre pour la mise à disposition de l'huile lubrifiant l'engrenage de la centrale à énergie éolienne,
- une deuxième chambre pour la mise à disposition d'huile hydraulique pour l'actionnement de servomécanismes hydrauliques de la centrale à énergie éolienne,
- un premier raccordement pour la connexion de la première chambre à une conduite pour l'alimentation de l'engrenage en huile de graissage et
- un deuxième raccordement pour la connexion de la deuxième chambre à une conduite pour l'alimentation des servomécanismes exploités hydrauliquement en huile hydraulique, et
un échangeur thermique (40) pour évacuer de la chaleur de l'huile hydraulique, de l'huile à engrenages et du liquide de refroidissement, qui emmagasine la chaleur de dissipation des composants électriques (E) de la centrale à énergie éolienne et est amené vers l'échangeur thermique (40).

2. Unité d'alimentation hydraulique (10) d'après revendication 1, **caractérisée en ce que** le liquide de refroidissement est amené dans un circuit de refroidissement (200).

3. Unité d'alimentation hydraulique (10) d'après l'une des revendications précédentes, **caractérisée en ce que** le circuit de refroidissement (200) présente au moins un autre échangeur thermique (220) pour transférer de la chaleur de l'huile à engrenages et/ou de l'huile hydraulique vers le liquide de refroidissement.

4. Unité d'alimentation hydraulique (10) d'après revendication 3, **caractérisée en ce qu'**au moins un autre échangeur thermique (220) est disposé en aval des composants électriques.

5. Unité d'alimentation hydraulique (10) d'après l'une des revendications précédentes, **caractérisée en ce que** le réservoir (30) présente une troisième chambre pour la mise à disposition de liquide de refroidissement.

6. Unité d'alimentation hydraulique (10) après l'une des revendications précédentes, **caractérisée en ce que** l'unité d'alimentation est disposée sur une plaque-support (20).

7. Unité d'alimentation hydraulique (10) d'après l'une des revendications précédentes, **caractérisée en ce que** le réservoir présente des (30) amortisseurs de vibrations (50).

8. Unité d'alimentation hydraulique (10) d'après revendication 6, **caractérisée en ce que** la plaque-support (20) présente au moins un logement (60) pour un moteur pour l'entraînement torque et que le réservoir présente (30) une cavité (70) dans l'espace qu'occupera le moteur.

9. Unité d'alimentation hydraulique (10) d'après l'une des revendications précédentes, **caractérisée en ce que** le réservoir (30) est pourvu d'un trou d'homme (80).

10. Unité d'alimentation hydraulique (10) d'après l'une des revendications précédentes, **caractérisée en ce que** les raccordements pour les conduites à fluide sont formés comme raccords vissés et que les raccordements pour les câbles électriques sont formés comme fiches de raccordement.

11. Unité d'alimentation hydraulique (10) d'après l'une des revendications précédentes, **caractérisée en ce que** sur le dessous du réservoir (30) sont disposés des raccordements pour amener et/ou purger l'huile hydraulique, l'huile de graissage ou le liquide de refroidissement.
